# EUROPÄISCHE PATENTSCHRIFT

(11) **EP 1 004 123 B1**
(45) Veröffentlichungstag und Bekanntmachung des Hinweises auf die Patenterteilung: **03.12.2003**
(21) Anmeldenummer: 98948706.1
(22) Anmeldetag: 29.07.1998
(51) Int. Cl.: H01B 19/00

(54) **VERFAHREN UND FORM ZUR HERSTELLUNG VON SCHIRMISOLATOREN**
METHOD AND MOULD FOR PRODUCING UMBRELLA-TYPE INSULATORS
PROCEDE ET MOULE POUR FABRIQUER DES ISOLATEURS TYPE PARAPLUIE

(30) Priorität: 08.08.1997 DE 19734362
(43) Veröffentlichungstag der Anmeldung: 31.05.2000
(73) Patentinhaber: Trench Germany GmbH, 96050 Bamberg (DE)
(72) Erfinder: OPPELT, Herbert, D-96158 Frensdorf (DE); DEUERLING, Willi, D-96135 Mühlendorf (DE)
(74) Vertreter: Hufnagel, Walter, Dipl.-Ing., Dipl.-Wirtsch.-Ing.
(86) Internationale Anmeldenummer: DE9802209
(87) Internationale Veröffentlichungsnummer: WO99008290

(56) Entgegenhaltungen:
- EP-A- 0 033 848
- US-A- 4 690 630
- US-A- 5 648 132

## Beschreibung

Die vorliegende Erfindung bezieht sich auf ein Verfahren und eine Form zur Herstellung eines Schirmisolators gemäß den Oberbegriffen der Ansprüche 1 und 8.

Ein derartiger Schirmisolator ist aus der DE-A-23 00 145 bekannt. Dieser besteht aus einem Kern und mehreren an diesen angeformten Schirmen mit jeweils einer an den Schirmen angeformten und mit dem Kern verbundenen, nach unten verlaufenden Manschette. Die Herstellung erfolgt so, daß zunächst eine zweiteilige, fest zusammengepreßte Form über den Kern gebracht wird, die eine trichterförmige Gießform bildet, deren Kegelteil beim Eingießen des Isoliermaterials den Schirm und deren unterer Teil die Manschette bildet. Die Form umgibt den Kern unten mit Abstand in Form eines Ringspaltes, der vor dem Gießprozeß durch einen Dichtring abgedichtet wird. Die Formteile werden nach der Verfestigung des Isoliermaterials seitlich abgenommen.

Bei Versuchen mit einer ein- oder mehrteiligen Gießform, die nach dem Verfestigen des Isolier- bzw. Gießmaterials nach unten weggezogen wird, hat es sich herausgestellt, daß beim Entformen des Schirmes durch Wegziehen der Form nach unten Fälle auftreten, bei denen der Schirm mit nach unten weggezogen und dabei der Schirmrand so stark deformiert, d.h. nach unten gebogen wird, daß Spannungen oder gar Risse im Schirmmaterial auftreten. Damit ist eine einwandfreie Isolation nicht mehr gewährleistet.

Mit der vorliegenden Erfindung soll die Aufgabe gelöst werden, ein Verfahren und eine Form anzugeben, mit denen es möglich ist, eine einwandfreie Entformung der Schirme zu erreichen.

Gelöst wird diese Aufgabe durch die Maßnahmen bzw. Merkmale des Verfahrensanspruchs 1 bzw. des Sachanspruchs 8.

Mit diesen erfindungsgemäßen Maßnahmen bzw. Merkmalen kann der Schirm beim Entformen nicht mehr an der Form haften, da zwischen Form und Schirm nur kurzfristig oder überhaupt kein Vakuum mehr auftritt. Der Schirm kann daher ohne Deformation entformt werden.

Weitere vorteilhafte Einzelheiten der Erfindung sind in den Unteransprüchen angegeben und werden nachfolgend anhand der in der Zeichnung veranschaulichten Ausführungsbeispiele näher beschrieben. Es zeigen:
- Fig. 1: die eine Hälfte einer Seitenansicht im Querschnitt eines an einen Kern angeformten Schirms mit der Form im gegossenen Zustand,
- Fig. 2: die Ansicht gemäß Fig. 1 im teilweise entformten Zustand mit und ohne Deformation des Schirmes und
- Fig. 3: einen Querschnitt durch ein in die Form eingesetztes Ventil.

Mit 1 ist ein Teil eines Schirmisolators bezeichnet, dessen Kern als Voll- oder - wie dargestellt - als Hohlkörper 2 ausgebildet ist und einen daran angeformten Schirm 3 mit einer angeformten Manschette 4 aufweist. Der Kern 2 besteht aus einem mit Verstärkungsmitteln, insbesondere Glasfasern, verstärkten Isoliermaterial, insbesondere aus Silikon. Über den Kern 2 ist eine ein- oder mehrteilige Form 5 geschoben, die einen dem zu formenden Schirm 3 mit Manschette 4 entsprechend geformten trichterförmigen Formraum 5.1 besitzt. Der die Manschette 4 bildende Teil 5.2 des Formraums 5.1 besitzt am Manschettenende 4.1.einen Ringspalt 6, der für den Gießprozeß durch eine elastische Dichtung 7, beispielsweise in Form einer Ring- oder O-Dichtung, abgeschlossen ist.

Im Bereich des Manschettenendes 4.1 ist in der Form 5 seitlich ein Ventil 8, beispielsweise in Form eines Telleroder Kegelventils vorgesehen, insbesondere eingeschraubt. Mit Vorteil reicht die Außenfläche 8.1 des Ventils 8 bis an die Oberfläche des Schirms bzw. bis an die Oberfläche 4.2. der Manschette 4 desselben heran. Insbesondere ist sie bündig mit der Oberfläche 5.3 der Form 5.

Zur Herstellung eines Schirmes 3 mit Manschette 4 wird zunächst die Form an den zugeordneten Platz auf dem Kern 2 bzw. an die Kernwand gebracht und mit der elastischen Dichtung 7 abgedichtet. Anschließend wird der Formraum 5.1 von oben mit einem Gießmaterial ausgefüllt, das anschließend zu einem isolierenden Formkörper erstarrt. Als geeignetes Material dient ein nicht verstärktes oder verstärktes, zunächst gießfähiges und anschließend durch Vernetzung sich verfestigendes polymeres Material, insbesondere Silikon. Dieses Material verbindet sich beim Vernetzen mit dem Material des Kerns 2 bzw. der Kernwand.

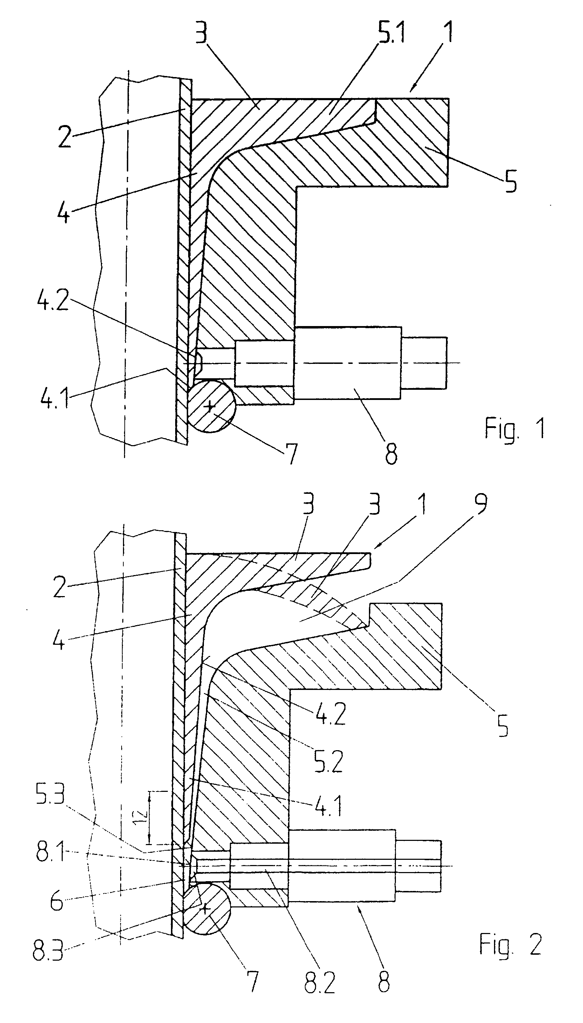

Nach dem Aushärten oder Verfestigen des eingegossenen Materials wird die Form 5 zusammen mit der Dichtung 7 in der Zeichnung nach unten wegbewegt. Dadurch entsteht, wie in der Fig. 2 veranschaulicht, ein Hohlraum 9. Im Hohlraum 9 entsteht dabei ein Vakuum, das bei nicht vorhandenem Ventil 8 den Schirm 3 in der gestrichelt angedeuteten Weise nach unten zieht, wodurch auf dessen Oberseite Spannungen oder gar Risse entstehen können.

Gemäß der Erfindung kann nun infolge des vorhandenen Ventils 8 beim Wegbewegen der Form 5 nach unten sich dieses Ventil 8 von selbst infolge des Unterdruckes und/oder zusätzlich durch Einlassen oder Einblasen eines gasförmigen Mediums, insbesondere Luft, beispielsweise mit Überdruck, öffnen. Dadurch kann der Schirm 3 mit Manschette 4 ohne Verformung aus der Form 5 entformt werden, so daß eine einwandfreie Isolation des Materials des Schirms 3 gewährleistet ist. Siehe hierzu die in Fig. 2 vollständig ausgezeichneten Linien des Schirmes 3.

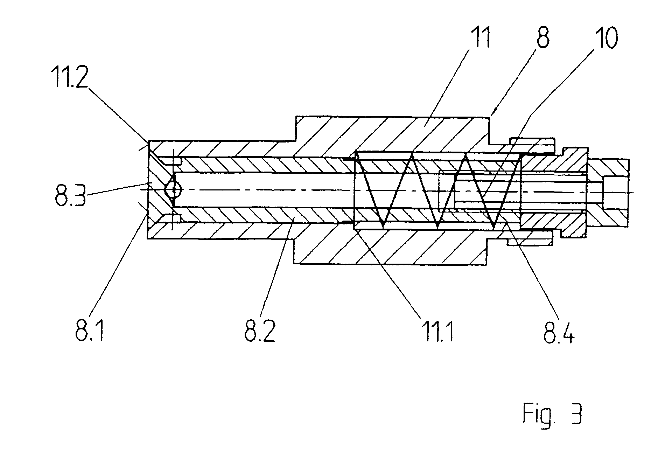

Als Ventil 8 ist beim Ausführungsbeispiel ein solches mit einem Ventilstößel 8.2 und mit einem Ventilteller oder - kegel 8.3 verwendet. Die Betätigung in die Offenstellung erfolgt durch Druck auf den Ventilstößel 8.2 entgegen der Kraft einer Druckfeder 10, die zwischen einem Anschlag 8.4 des Ventilstößels 8.2 und einem Anschlag 11.1 eines Ventilgehäuses 11 eingespannt ist, wie aus Fig. 3 ersichtlich ist. Durch entsprechende Konstruktion des Ventilstößels 8.2 kann auch dessen Betätigung durch Zug erreicht werden. Die Betätigung kann mechanisch, elektrisch, hydraulisch oder pneumatisch erfolgen.

Vorzugsweise sind die Außenfläche 8.1 des Ventilkegels 8.3 und der diese umgebende Rand 11.2 des Ventilgehäuses 11 in einem einzigen Schleifprozeß gemeinsam geschliffen.

Vorteilhaft kann das Ventil 8 in der Form 5 derart angebracht sein, daß es sich im Bereich des die Manschette 4 bildenden Teils 5.2 des Formraums 5.1 oder im Bereich 12 des Manschettenendes 4.1 befindet.

Vorteilhaft ist es auch, wenn die formseitige Ventilfläche (Außenfläche 8.1) mit der benachbarten Formfläche 5.3 fluchtet.

Bevorzugt besitzt das Ventil 8 einen Ventilstößel 8.2 mit formseitigem Ventilteller oder Ventilkegel 8.3.

Mit Vorteil ist der Ventilstößel 8.2 in einem Ventilgehäuse 11 geführt und mittels einer Druckfeder 10 in Schließstellung gehalten, wobei die Außenfläche 8.1 des Ventiltellers oder Ventilkegels 8.3 und der diesen umgebende Rand 11.2 des Ventilgehäuses 11 gemeinsam geschliffen ausgebildet sind.

Schließlich kann das Ventil 8 in die Form 5 seitlich eingesetzt, insbesondere eingeschraubt sein.

Das Entformen erfolgt bevorzugt in der Weise, daß die Form 5 zunächst so weit nach unten wegbewegt wird, daß der Ventilkegel oder Ventilteller 8.3 beim Öffnen des Ventils 8 nicht gegen die Manschette 4 drücken kann, sondern gegebenenfalls an den Kern 2 anschlägt.

## Patentansprüche

1. Verfahren zur Herstellung eines Schirmisolators (1) aus Kunststoff mit einem als Voll- oder Hohlkörper ausgebildeten Kern (2) und mit dem Kern (2) verbundenen Schirmen (3), sowie mit an den Schirmen (3) angeformten, den Kern (2) koaxial umgebenden Manschetten (4) mittels einer ein- oder mehrteiligen Form (5), die den Kern (2) bei der Herstellung koaxial umfaßt und am Manschettenende (4.1) des jeweils zu bildenden Schirmes (3), gegen den Kern (2) einen Ringspalt (6) bildet, der mit einer elastischen Dichtung (7) abgedichtet wird, wobei nach dem Abdichten in die Form (5) von oben her ein zunächst gießfähiges, zu einem festen, elektrisch isolierenden Körper vernetzendes Material eingefüllt und nach der Vernetzung und Bildung des jeweiligen Schirmes (3) mit der Manschette (4) die Form (5) mit der Dichtung (7) von dem Schirm (3) wegbewegt und dabei der gebildete Schirm (3) mit Manschette (4) entformt wird, **dadurch gekennzeichnet, daß** eine Form (5) mit zumindest einem seitlich angeordneten Ventil (8), das bis an die Oberfläche (4.2) des Schirmes (3) bzw. der Manschette (4) heranreicht, verwendet wird, daß unmittelbar nach Beginn oder während des axialen Wegbewegens der Form (5) vom Schirm (3) mit Manschette (4) in den zwischen dem Kern (2) und Schirm (3) mit Manschette (4) einerseits und der Form (5) andererseits sich bildenden Hohlraum (9) infolge des sich darin bildenden Unterdrucks das Ventil (8) selbsttätig oder unter Anwendung von Zug oder Druck geöffnet und über das Ventil (8) ein gasförmiges Medium in den Hohlraum (9) eingebracht wird, so daß das Wegziehen der Form (5) ohne Verformung, jedenfalls ohne unzulässige Verformung, des Schirmes (3), ermöglicht wird.

2. Verfahren nach Anspruch 1, **dadurch gekennzeichnet, daß** beim Entformen des Schirmes (3) mit Manschette (4) das Ventil (8) zunächst infolge Unterdrucks im Hohlraum (9) selbsttätig öffnet und anschließend das gasförmige Medium, insbesondere Luft, unter Druck eingeblasen wird.

3. Verfahren nach Anspruch 1, **dadurch gekennzeichnet, daß** über das Ventil (8) von außen das gasförmige Medium mit Überdruck in den Hohlraum (9) eingebracht wird.

4. Verfahren nach einem der Ansprüche 1 bis 3, **dadurch gekennzeichnet, daß** zur Zufuhr des gasförmigen Mediums ein mechanisch, pneumatisch, elektrisch oder hydraulisch betätigbares Ventil (8) verwendet wird.

5. Verfahren nach Anspruch 4, **dadurch gekennzeichnet, daß** ein über einen Ventilstößel (8.2) steuerbares Ventil (8) verwendet wird, das bei Druck auf dessen Ventilstößel (8.2) öffnet.

6. Verfahren nach Anspruch 4, **dadurch gekennzeichnet, daß** ein über einen Ventilstößel (8.2) steuerbares Ventil (8) verwendet wird, das bei Zug am Ventilstößel (8.2) öffnet.

7. Verfahren nach einem der Ansprüche 1 bis 6, **dadurch gekennzeichnet, daß** eine Form (5) verwendet wird, bei der das Ventil (8) im Endbereich (12) des die Manschette (4) bildenden Teils (5.2) der Form (5) mündet und daß das Ventil (8) erst dann öffnet oder geöffnet wird, wenn die Form (5) so weit weggezogen ist, daß beim Öffnen oder vollständigen Öffnen des Ventils (8) die Außenfläche (8.1) des Ventiltellers oder Ventilkegels (8.3) unterhalb des Manschettenendes (4.1) liegt.

8. Form zur Herstellung eines Schirmisolators nach dem Verfahren nach einem der Ansprüche 1 bis 7, **dadurch gekennzeichnet, daß** die Form (5) einen trichterförmigen Formraum (5.1) aufweist und das Ventil (8) im Bereich des die Manschette (4) bildenden Teils (5.2) des Formraums (5.1) in diesen mündet.

9. Form nach Anspruch 8, **dadurch gekennzeichnet, daß** das Ventil (8) im Bereich (12) des Manachettenendes (4.1) vorgesehen ist.

10. Form nach Anspruch 8 oder 9, **dadurch gekennzeichnet, daß** die formseitige Ventilfläche (Außenfläche 8.1) mit der benachbarten Formfläche (5.3) fluchtet.

11. Form nach einem der Ansprüche 8 bis 10, **dadurch gekennzeichnet, daß** das Ventil (8) einen Ventilstößel (8.2) mit formseitigem Ventilteller oder Ventilkegel (8.3) besitzt.

12. Form nach Anspruch 11, **dadurch gekennzeichnet, daß** der Ventilstößel (8.2) in einem Ventilgehäuse (11) geführt und mittels einer Druckfeder (10) in Schließstellung gehalten ist, und daß die Außenfläche (8.1) des Ventiltellers oder Ventilkegels (8.3) und der diesen umgebende Rand (11.2) des Ventilgehäuses (11) gemeinsam geschliffen ausgebildet sind.

13. Form nach einem der Ansprüche 8 bis 12, **dadurch gekennzeichnet, daß** das Ventil (8) in die Form (5) seitlich eingesetzt, insbesondere eingeschraubt ist.

## Claims

1. Method for production of an umbrella-type insulator (1) made of plastic with a core (2) embodied as a solid or hollow body, and umbrella elements (3) connected to the core (2), and with sleeves (4) moulded to the umbrella elements (3) and surrounding the core (2) coaxially by means of a one-part or multi-part mould (5) which surrounds the core (2) coaxially during production and at the sleeve end (4.1) of the umbrella element (3) to be formed forms an annular gap (6) against the core (2), which gap is sealed with an elastic seal (7), and after the sealing an initially pourable material to be cross-linked to form a solid electrically insulating body is poured into the mould (5) from the top and after the cross-linking and formation of the respective umbrella element (3) with the sleeve (4) the mould (5) with the seal (7) is moved away from the umbrella element (3) and in the process the moulded umbrella element (3) with the sleeve (4) is removed from the mould, **characterised in that** a mould (5) is used with at least one laterally arranged valve (8) which extends to the surface (4.2) of the umbrella element (3) or the sleeve (4), **in that** immediately after the beginning of or during the axial movement of the mould (5) away from the umbrella element (3) with the sleeve (4) into the cavity (9) forming between the core (2) and the umbrella element (3) with the sleeve (4) on the one hand and the mould (5) on the other hand due to the vacuum forming therein, the valve (8) is opened automatically or using traction or pressure and a gaseous medium is introduced into the cavity (9) through the valve (8) so that the mould (5) can be pulled away without deformation, in any case without unacceptable deformation, of the umbrella element (3).

2. Method according to claim 1, **characterised in that** when the umbrella element (3) with the sleeve (4) is removed from the mould, the valve (8) initially opens automatically due to the vacuum in the cavity (9) and then the gaseous medium, in particular air, is injected under pressure.

3. Method according to claim 1, **characterised in that** the gaseous medium is introduced at a positive pressure into the cavity (9) from outside through the valve (8).

4. Method according to one of claims 1 to 3, **characterised in that** a mechanically, pneumatically, electrically or hydraulically actuated valve (8) is used to supply the gaseous medium.

5. Method according to claim 4, **characterised in that** use is made of a valve (8) which is controllable by means of a valve plunger (8.2) and opens when pressure is applied to its valve plunger (8.2).

6. Method according to claim 4, **characterised in that** use is made of a valve (8) which is controllable by means of a valve plunger (8.2) and opens when traction is applied to the valve plunger (8.2).

7. Method according to one claims 1 to 6, **characterised in that** a mould (5) is used in which the valve (8) debouches in the end region (12) of the part (5.2) of the mould (5) forming the sleeve (4) and **in that** the valve (8) only opens or is opened when the mould (5) has been pulled away so far that the external face (8.1) of the valve head or valve cone (8.3) lies below the end of the sleeve (4.1) when the valve (8) is opened or opened completely.

8. Mould for production of an umbrella-type insulator by the method according to one of claims 1 to 7, **characterised in that** the mould (5) exhibits a funnel-shaped mould chamber (5.1) and the valve (8) debouches into the mould chamber (5.1) in the area of the part (5.2) thereof forming the sleeve (4).

9. Mould according to claim 8, **characterised in that** the valve (8) is provided in the region (12) of the end of the sleeve (4.1) .

10. Mould according to claim 8 or 9, **characterised in that** the valve face on the mould side (external face 8.1) is flush with the neighbouring mould face (5.3).

11. Mould according to one of claims 8 to 10, **characterised in that** the valve (8) has a valve plunger (8.2) with a valve head or valve cone (8.3) on the mould side.

12. Mould according to claim 11, **characterised in that** the valve plunger (8.2) is guided in a valve housing (11) and held in the closed position by means of a compression spring (10), and **in that** the external face (8.1) of the valve head or valve cone (8.3) and the edge (11.2) of the valve housing (11) surrounding the latter are ground together.

13. Mould according to one of claims 8 to 12, **characterised in that** the valve (8) is inserted, in particular screwed, into the mould (5) at the side.

## Revendications

1. Procédé pour fabriquer un isolateur type parapluie (1) en matière synthétique présentant un coeur (2) configuré avec un corps plein ou avec un corps creux, des parapluies (3) reliés au coeur (2) ainsi que des manchons (4) entourant coaxialement le coeur (2) et étant formés sur les parapluies (3) au moyen d'un moule (5) en une ou en plusieurs pièces qui entoure coaxialement le coeur (2) lors de sa fabrication et forme à l'extrémité du manchon (4.1) du parapluie (3) respectif restant à former contre le coeur (2) une fente annulaire (6) qui est étanchéifiée à l'aide d'un joint élastique (7), dans lequel on remplit le moule (5) par le haut, après étanchéiflcation, un matériau d'abord liquide réticulant avec un corps électriquement isolant solide puis on détache le moule (5), avec le joint élastique (7), du parapluie (3) respectif après la réticulation et la formation conjointe du parapluie (3) d'avec le manchon (4), et on démoule ainsi le parapluie (3) avec manchon (4),
**caractérisé en ce qu'**
on utilise un moule (5) présentant au moins une vanne (8) disposée latéralement qui atteint la surface (4.2) du parapluie (3) ou du manchon (4), la soupape (8) s'ouvre dès que le moule (5) commence à se détacher axialement du parapluie (3) avec manchon (4) ou bien pendant son détachement, soit automatiquement soit par traction ou par pression, dans l'espace creux (9) se formant entre le coeur (2) et le parapluie (3) avec manchon (4) d'une part et le moule (5) d'autre part du fait de la dépression intérieure s'y accumulant et **en ce qu'**un milieu gazeux est introduit dans l'espace creux (9) au moyen de soupape (8) de telle sorte que le détachement du moule (5) est possible sans déformer, du moins sans déformer de façon inacceptable, le parapluie (3).

2. Procédé selon la revendication 1,
**caractérisé en ce que**
lors du détachement du parapluie (3) avec manchon (4) la soupape (8) s'ouvre automatiquement du fait de la dépression régnant dans l'espace creux (9) puis le milieu gazeux, notamment de l'air, est insufflé sous pression.

3. Procédé selon la revendication 1,
**caractérisé en ce que**
le milieu gazeux est introduit en surpression de l'extérleur dans l'espace creux (9), au moyen de la soupape (8).

4. Procédé selon l'une quelconque des revendications 1 à 3,
**caractérisé en ce qu'**
on utilise une vanne (8) pouvant être actionnée de façon mécanique, pneumatique, électrique ou hydraulique pour l'amenée du milieu gazeux.

5. Procédé selon la revendication 4,
**caractérisé en ce qu'**
on utilise une soupape (8) pouvant être commandée au moyen d'un poussoir de soupape (8.2) et s'ouvrant en comprimant son poussoir de soupape (8.2).

6. Procédé selon la revendication 4,
**caractérisé en ce qu'**
on utilise une soupape (8) pouvant être commandée via un piston de soupape (8.2) et s'ouvrant en tirant sur le poussoir de soupape (8.2).

7. Procédé selon l'une quelconque des revendications 1 à 6,
**caractérisé en ce qu'**
on utilise un moule (5) dans lequel la vanne (8) débouche dans la zone terminale (12) de la pièce (5.2) du moule (5) formant le manchon (4) et la soupape (8) ne s'ouvre ou n'est ouverte que lorsque le moule (5) est suffisamment détaché pour qu'à l'ouverture partielle ou totale de la soupape (8), la surface extérieure (8.1) de l'actionneur de soupape ou du cône de soupape (8.3) se trouve en dessous de l'extrémité du manchon (4.1).

8. Moule pour fabriquer un isolateur type parapluie d'après le procédé selon l'une quelconque des revendications 1 à 7,
**caractérisé en ce que**
le moule (5) présente un espace (5.1) en forme d'entonnoir et **en ce que** la soupape (8) débouche dans celui-ci, dans la zone de la pièce (5.2) de l'espace (5.1) formant le manchon (4).

9. Moule selon la revendication 8,
**caractérisé en ce que**
la soupape (8) est prévue dans la zone (12) située à l'extrémité du manchon (4.1).

10. Moule selon les revendications 8 et 9,
**caractérisé en ce que**
la surface de la soupape se trouvant côté moule (surface extérieure 8.1) est alignée avec la surface du moule (5.3) contiguë.

11. Moule selon l'une quelconque des revendications 8 à 10,
**caractérisé en ce que**
la soupape (8) possède un piston de soupape (8.2) présentant côté moule un actionneur de soupape ou un cône de soupape (8.3).

12. Moule selon la revendication 11,
**caractérisé en ce que**
le poussoir de soupape (8.2) est introduit dans un carter de soupape (11) et qu'il est maintenu en position fermée au moyen d'un ressort de pression (10) et **en ce que** la surface extérieure (8.1) du poussoir de soupape ou du cône de soupape (8.3) ainsi que le bord (11.2) du carter de soupape ( 11) les entourant sont configurés de manière à être polis ensemble.

13. Moule selon l'une quelconque des revendications 8 à 12,
**caractérisé en ce que**
la soupape (8) est placée latéralement dans le moule (5), et notamment qu'elle y est vissée.
